# EUROPEAN PATENT APPLICATION

(11) **EP 4 197 780 A1**
(43) Date of publication of application: **21.06.2023**
(21) Application number: 21214279.8
(22) Date of filing: 14.12.2021
(51) Int. Cl.: B32B 17/10

(54) **LAMINATED GLASS COMPRISING FUNCTIONAL POLYMER FILM WITH UV SHIELDING**

(71) Applicant: Kuraray Europe GmbH, 65795 Hattersheim (DE)
(72) Inventor: MUGURUMA, Shinichi, Tsukuba, Ibaraki, 305-0841 (JP); ISOUE, Kouichiro, Kurashiki, Okayama, 713-8550 (JP)
(74) Representative: Janßen, Christian Oliver

(57) **Abstract**

The invention is directed to laminated glass comprising two glass sheets laminated by means of at least one thermoplastic interlayer comprising at least one functional polymer film and a UV-shielding polymer film.

## Description

The invention is directed to laminated glass comprising two glass sheets laminated by means of at least one thermoplastic interlayer comprising at least one functional polymer film and a UV-shielding polymer film.

Laminated safety glass usually consists of two glass sheets laminated by means of a thermoplastic polymer film. Such films are generally made from plasticiser-containing polyvinyl acetals like polyvinyl butyral (PVB).

It is often desired to provide laminated glass with additional features like heat shielding, decorative prints or improved penetration resistance by embedding a thin, optional functionalised polymer film in the laminate. Thin polyester films are often used as such functional films since they can be easily functionalised for example by sputtering, printing or nano-layering.

One disadvantage of these polyester films is that they do not adhere well to the inner glass surface of the glass sheets used in the laminated glass. To this end, EP 3246157 A1 describes the use of a thin film comprising PVB and low amounts of plasticizer to be present between the polyester film and the glass. Such PVB thin films promote the adhesion of the polyester film to the glass surface.

It has now been surprisingly found that certain functional films deteriorate over time when they are exposed to UV light.

The problem addressed by the present invention was therefore to provide a laminated glass comprising a functional polymer film with an improved stability and optionally improved further functionalization.

Accordingly, the invention concerns a laminated glass comprising a first glass sheet and a second glass sheet laminated by means of at least one thermoplastic interlayer comprising at least one functional polymer film C sandwiched by
- at least one film A with a thickness of equal to or less than 100 µm comprising a polyvinyl acetal and a UV absorber, and
- at least one film B comprising a polyvinyl acetal and at least one plasticiser,
   characterised in that film A has a light transmittance for light with a wavelength of 380 nm of 15% or less and a light transmittance for light with a wavelength of 350 nm of 3% or less .

The light transmittance is measured according to JIS R 3106.

Preferably, the functional polymer film C comprises a polyamide, a polyester such as polyethylene terephthalate (PET), polybutylene terephthalate (PBT), polyethylen furanoate (PEF) and polyethylene naphthalate (PEN), polyvinyl alcohol (PVA), polylactic acid (PLA), cellulose acetate, polymethyl methacrylates (PMMA), ionomers, or a combination thereof. Most preferably, the functional polymer film C comprises a polyester such as polyethylene terephthalate (PET) and polybutylene terephthalate (PBT).

Preferably, film C has a thickness of 10 - 1000 µm, more preferably 20 - 500 µm, even more preferably 30 µm - 200 µm and most preferably 40 µm - 150 µm.

More preferably, film C is provided with a heat-shielding function, a head-up display function, a metal-film function, a non-metal film function or a photovoltaic function.

The heat-shielding function of films C may be provided by a metallic coating for example containing silver, gold, indium, aluminium or rhodium. The coating may have a thickness of 1-500 nm and can be applied for example by chemical vapour decomposition methods. A good commercial example of such heat-shielding film is EASTMA 's XIR^{®} SOLAR CONTROL FILMS which consist of PET substrate film carrying different kind of metallic coating which reflect heat radiation but keep a relatively high light transmission.

In another embodiment film C may contain heat-shielding particles, for example ITO, ATO, AZO, IZO, zinc antimonates, tin-doped zinc oxide, silicon-doped zinc oxide, gallium-doped zinc oxide, tungstates, such as Li 03, Na 03, Cs 03, lanthanum hexaboride or cerium hexaboride.

In another embodiment film C may contain pigments or dye to reduce the transmittance or for decoration in or on the film C.

In still another embodiment film C may be composed of a plurality of alternating layers having a different refractive index in order to provide a (non-metallic) light reflective function for heat-shielding (IR reflection), HUD or decorative. Such alternating layers may be formed themselves by coating thin layers containing inorganic particles such as TiO₂ and SiO₂ or by coextruding polymer melts from PET and PMMA or PET and PEN. A good commercial example is , 3M^{™} Ultra-Clear Solar Film (UCSF), Konica Minolta's ICE-µ.

In the other embodiment film C may contain a liquid crystalline polymer layer, photo-chromic compound, thermo-chromic compound, electro-chromic compound, micro-lens structure or hologram layer.

Preferably, film A comprises from 0.5 to 5.0 wt%, more preferably from 1.0 to 4.5 wt%, even more preferably from 2.5 to 4.0 wt% of UV absorber. If more than one UV absorber is present in film A, these values shall be read as the total amount of UV absorber.

Also preferably, the UV absorber is chosen from a benzotriazole-based compound, a benzophenone-based compound, a triazine-based compound, a benzoate-based compound, a malonic ester-based compound, or an oxalic anilide-based compound.

More preferably, the UV absorber is a benzotriazole-based UV absorber such as 2-(5-methyl-2-hydroxyphenyl)benzotriazole, 2-[2-hydroxy-3,5-bis(a,ω-dimethylbenzyl)phenyl]-2H-benzotriazole, 2-(3,5-di-t-butyl-2-hydroxyphenyl)benzotriazole, 2-(5-chloro-2-benzotriazolyl)-6-tert-butyl-p-cresol, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole; or a hindered amine-based UV absorber such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, and 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine; or a benzoate-based UV absorber such as 2,4-di-t-butylphenyl-3,5-di-t-butyl-4-hydroxybenzoate, and hexadecyl-3,5-di-t-butyl-4-hydroxybenzoate.

Suitable examples of the triazine-based compound include 6-(4-hydroxy-3,5-di-t-butylanilino)-2,4-bis-octylthio-1,3, 5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine.

Suitable examples of the benzophenone-based compound include 2-hydroxy-4-methoxybenzophenone, 2,2'-dihydroxy-4-methoxybenzophenone, 2-hydroxy-4-methoxy-2-carboxybenzophenone, and 2-hydroxy-4-n-octoxybenzophenone.

Suitable examples of the malonic ester compound include dimethyl 2-(p-methoxybenzylidene) malonate, tetraethyl-2,2-(1,4-phenylenedimethylidene)bismalonate, and 2-(p-methoxybenzylidene)-bis(1,2,2,6,6-pentamethyl-4-piper idinyl)malonate.

Suitable examples of the oxalic anilide compound include oxalic diamides having an aryl group substituted on a nitrogen atom such as N-(2-ethylphenyl)-N'-(2-ethoxy-5-t-butylphenyl)oxalic diamide, N-(2-ethylphenyl)-N'-(2-ethoxy-phenyl)oxalic diamide, and 2-ethyl-2'-ethoxy-oxyanilide ("Sanduvor VSU" manufactured by Clariant, Inc.).

Film A can be produced by any conventional method such as melt extrusion or solvent casting. In case film A is produced by solvent casting, a solution comprising the polyvinyl acetal and the UV absorber in an organic solvent is casted onto a carrier film or directly onto film C and subsequently, the solvent is evaporated to obtain film A or laminate of film A film C.

In case film A is produced by melt extrusion, it has now been found by the present inventors that some UV absorbers evaporate during the extrusion process and are clogging up the vent openings of the extruder over time. Therefore, it is most preferred to use a UV absorber which has a vapour pressure of equal to or below 10 * 10⁻¹³ Pa measured at 25 ºC. For the same reason it is also most preferred that the UV absorber has a volatility of equal to or below 5 wt% as measured by thermogravimetric analysis as pure substance with a heating rate of 20 °C/min in air at 350 ºC.

Also most preferably, the UV absorber has a hydroxyphenyl benzotriazole structural unit. Especially preferred is phenol, 2,2'-methylene-bis(6-(2H-benzotriazol-2-yl)-4-(1,1,3,3-tetramethylbutyl)), commercially available under the name Tinuvin^{®} 360 from BASF Schweiz AG.

Also preferably, film A, film B, and/or the functional polymer film C is/are provided with a heat-shielding function, a head-up display function, a metal-film function, a non-metal film function or a photovoltaic function.

More preferably, film A is provided with a heat-shielding function and comprises indium tin oxide (ITO), antimony tin oxide (ATO), zinc antimonates, tin-doped zinc oxide, silicon-doped zinc oxide, gallium-doped zinc oxide, tungstates such as lithium-doped tungsten oxide, sodium-doped tungsten oxide and cesium-doped tungsten oxide, lanthanum hexaboride, cerium hexaboride, phthalocyanine compound, naphthalocyanine compound or a mixture thereof.

The thickness of film A is less than 100 µm, preferably 10 - 100 µm, more preferably 15 - 75 µm, most preferably 20 - 50 µm and specifically around 25 µm.

Preferably, the thickness of film B is 450 - 2500 µm, more preferably 600 - 1000 µm, and most preferably 700 - 900 µm.

The film A and film B used in accordance with the invention contain polyvinyl acetals, which are generally produced by acetalization of polyvinyl alcohol or ethylene vinyl alcohol copolymer.

The films can contain polyvinyl acetals, each having a different polyvinyl alcohol content, degree of acetalization, residual acetate content, ethylene proportion, molecular weight and/or different chain lengths of the aldehyde of the acetal groups.

In particular, the aldehydes used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl (n)acetal used in accordance with the invention results in particular from the reaction of at least one polyvinyl alcohol with one or more aliphatic unbranched keto-compounds containing 2 to 10 carbon atoms. To this end, n-butyraldehyde is preferably used and the polyvinyl acetal is polyvinyl butyral (PVB).

The film A or film B preferably contain polyvinyl acetals having a proportion of polyvinyl acetate groups based on the layers, either identically or differently, of 0.1 to 20 mol %, preferably 0.5 to 3 mol %, or 5 to 8 mol %.

The polyvinyl alcohol content of the used polyvinyl acetals PA of film A having a lower plasticiser content in the starting state may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content of the used polyvinyl acetals PB of film B, which is richer in plasticiser in the starting state, may be between 14 - 26 % by weight, 16 - 24 % by weight, 17 - 23 % by weight and preferably between 18 and 21 % by weight.

The vinyl alcohol content and vinyl acetate content of the polyvinyl acetal were determined in accordance with DIN ISO 3681 (Acetate content) and DIN ISO 53240 (PVA content).

Plasticiser-containing films B used in accordance with the invention contain at least 16 % by weight, such as 16.1 - 36.0 % by weight, preferably 22.0 - 32.0 % by weight and in particular 26.0 - 30.0 % by weight plasticiser.

Film A used in accordance with the invention may contain less than 18 % by weight (such as 17.9 % by weight), less than 12 % by weight, less than 8 % by weight, less than 6 % by weight, less than 4 % by weight, less than 3 % by weight, less than 2 % by weight, less than 1 % by weight or even no plasticiser (0.0 % by weight).

Suitable plasticisers can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

In addition, film A and film B may contain further additives, such as residual quantities of water, antioxidants, adhesion regulators, optical brighteners or fluorescent additives, stabilisers, colorants, processing aids, organic nanoparticles, pyrogenic silicic acid and/or surface active substances. In particular, film B may comprise 0.001 to 0.1 % by weight of alkaline salts and/or alkaline earth salts of carboxylic acids as adhesion regulators.

Film B may further contain one or more of the UV absorbers described above.

Film A additionally may comprise more than 0 ppm magnesium ions. The magnesium content is preferably more than 5 ppm, particular preferably 10 ppm, in particular 5 - 50 ppm.

The present invention also relates to a method for producing the glass laminates described above, in which the film C provided with film A is positioned on a glass sheet, covered by at least one film B, and a second glass sheet is then applied. More particularly, film C can be provided with film A and wound up and intermediately stored as a roll. This so provided film C / film A may then be combined with two plies of glass and film B to obtain a laminate according to the invention. It is strongly preferred that when producing film C with film A and film C carries a functional film on one of its surfaces, film A will be adhered onto such coated side of film C.

It is possible in accordance with the invention to first melt the film C with film A onto a glass sheet over the entire area or locally by increased temperature and to then cover this with the film B. Alternatively, the film C with film A and the film B can be positioned jointly between two glass sheets and molten at increased temperature.

The lamination step for producing a laminated glass is preferably carried out such that film C with its film A and film B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

Autoclave processes are carried out at an increased pressure from approximately 10 to 15 bar and temperatures from 100 to 145 °C over approximately 2 hours. Vacuum bag or vacuum ring methods, for example according to EP 1 235 683 B1, are being performed at approximately 200 mbar and 130 to 145 °C.

Vacuum laminators can also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A with film C or film B is first positioned on a glass sheet, and the further film B or film C and film A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

The glass film laminate may then be subjected to an autoclave process. A previously prepared pre-laminated of film C with film A is preferably positioned on the first glass sheet and covered by the thicker film B before the second glass sheet is applied. The method can be carried out in many conceivable and, in principle, practicable variants. For example, the film C with film A can be removed from a roll of an appropriate width, whereas film B has been tailor-cut beforehand to the size of the laminated glass to be produced. This is advantageous in particular in the case of windscreens and other automotive glazing parts. In this case, it is particularly advantageous to additionally still stretch the thicker film B before it is tailor cut. This enables a more economical use of film, or, for the case in which film B has a colour tint, allows the adaptation of the curvature thereof to the upper sheet edge.

It is also possible for the films B to have a wedge-shaped thickness profile. The laminated glass laminate according to the invention obtains a wedge-shaped thickness profile even with plane-parallel thickness profile of the film A and can be used in motor vehicle windscreens for HUD displays.

In the simplest case, film B is a commercially available PVB film with or without ink ribbon and with or without a wedge-like thickness profile.

In a preferred embodiment of the present invention, the laminates are used in a way that film A is facing the side with the higher exposure to the UV light, e.g. film A is facing the outside of a vehicle or a building in case the laminate is used as a windshield or a building window, respectively.

In another embodiment, the laminated glass may be composed of the combination of a film C with an IR reflective function and film A with an IR absorbing function. The film A with IR absorbing function is preferably on the side of film C which is facing the inside of the vehicle. Using tinted glass (green glass) as the room side glass is one of preferable examples.

In a preferred embodiment of the present invention, the total solar energy transmittance Tts of the light from film B side (not film A side) is lower than 50% as measured according to ISO13837.

A further aspect of the current invention is a pre-laminate consisting of a functional polymer film C comprising a polyester such as polyethylene terephthalate (PET) and polybutylene terephthalate (PBT) and a film A comprising a polyvinyl acetal and a UV absorber.

### EXAMPLES

### Preparation of PVB solution

A 18.0 % by weight solution of polyvinyl butyral (PVB) powder (commercially available grade Mowital^{®} B60H) including 3.5 % by weight of TINUVIN^{®} 326 were dissolved in a mixture of methanol / ethyl acetate (50:50 % by weight) was prepared.

### Preparation of film A

A film C (a commercially available polyester resin based nano-multilayer film) with a thickness of 100 µm was used as carrier.

A commercially available standard solvent coating apparatus including an unwinder, a coater, a dryer and a winder was used in slot die coating mode. The substrate speed was 1.1 m/min and the wet thickness of the coating solution on the moving substrate was 100 µm. The coating was conducted at a temperature of 26 °C.

The drying was performed in three sections. The roll supported drying unit was used at the first drying zone of 1.5 m length. The temperature of first zone was set to 80 °C and the air flow was set to 5 m/s. Two air floatation drying units were used as the second and third drying zone with a length of 1.5 m each. The temperature of the second and the third zone was set to 110 °C and 140 °C, respectively. In both zones, the air flow was set to 10 m/s. The total drying time in the three zones combined was 4 min.

After this drying process, a stack of a film A and a film C was prepared. Three different thicknesses of film A were prepared.
Example 1: 15 µm
Example 2: 10 µm
Example 3: 5 µm

Additionally, comparative example 1 was prepared in the same way but without TINUVIN^{®} 326. The thickness was 15 µm.

The light transmittances were measured according to JIS R 3106.

| **Sample** | **Comp Ex 1** | **Example 1** | **Example 2** | **Example 3** |
|---|---|---|---|---|
| | Trans-mission (%) | Trans-mission (%) | Trans-mission (%) | Trans-mission (%) |
| @350nm | 84 | <1 | <1 | 1 |
| @380nm | 84 | 3 | 7 | 20 |

### Example 4

A polyvinyl butyral (PVB) powder (commercially available grade Mowital^{®} B60H) and 1.0 % by weight of TINUVIN^{®} 326 were blended , melt-kneaded to be extruded into strands, and pelletized. The obtained pellets were melt-extruded using a single screw extruder and a T-die, and a 50 µm-thick polyvinyl acetal resin film A with a smooth surface was obtained using a metal elastic roll.

TINUVIN^{®} 326 were clogging up the vent openings of the extruder over time.

The amount of TINUVIN^{®} 326 in film A was 0.8 % by weight.

A vapour pressure of TINUVIN^{®} 326 was 7.5 * 10⁻⁷ Pa measured at 20 ºC.

Additionally, example 5 was prepared in the same way but using 1.0 % by weight of TINUVIN^{®} 360. The thickness was 50 µm. Additionally, example 6 was prepared in the same way but using 2.0 % by weight of TINUVIN^{®} 360. The thickness was 50 µm.

No clogging up the vent openings of the extruder was observed. The amount of TINUVIN^{®} 360 in film A was 2.0 % by weight.

A vapour pressure of TINUVIN^{®} 360 was 6.0 * 10⁻¹³ Pa measured at 25 ºC.

The light transmittances were measured according to JIS R 3106.

| **Sample** | **Example 4** | **Example 5** | **Example 6** |
|---|---|---|---|
| | Trans-mission (%) | Trans-mission (%) | Trans-mission (%) |
| @350nm | <1 | <1 | <1 |
| @380nm | 5 | 23 | 5 |

### Preparation of the laminated glass

A 30 x 30 cm stack of - in this order - film A (examples 1 to 3) as prepared above, a film C (a commercially available polyester resin based nano-multilayer film of around 0.1 mm) and a film B (TROSIFOL^{®} VG-SC+ 0.80 mm (a clear acoustic tri-layer PVB film commercially available from Kuraray Europe GmbH, containing 29% by weight of plasticizer) was provided. This stack was sandwiched between two sheets of Planilux^{®} 2.1 mm glass. The preassembly was de-aired in a vacuum bag (10 min cold vacuum, 20 min vacuum at 90 °C air temperature) before subjecting it to a standard autoclave process (total of 90 min, 140 °C max, 12 bar max).

### Xenon test of the laminated glass

The laminated glass thus prepared was tested in an accelerated weathering test according to test method PV3929 with a duration of 0, 500, 1000, and 2000 hours.

The colour of the laminates using the L* a* b* ΔE system as well as their light transmittance and haze values were evaluated. As can be seen from the experimental results, the unprotected functional film in comparative example 1 degrades already after 500 h in the weathering test. On the other side, a film A including the UV absorber already leads to an improved performance with a thickness as thin as 5 µm and to complete protection in the weathering test with a thickness of 10 and 15 µm.

| **Sample** | **Comp Ex 1** | | **Example 1** | | **Example 2** | | **Example 3** | |
|---|---|---|---|---|---|---|---|---|
| Duration | Trans-mission (%) | Haze | Trans-mission (%) | Haze | Trans-mission (%) | Haze | Trans-mission (%) | Haze |
| 0 | 85 | 1.2 | 84 | 1.4 | 84 | 1.5 | 84 | 1.5 |
| 500h | 79 | 1.1 | 84 | 1.3 | 84 | 1.3 | 84 | 1.3 |
| 1000h | 74 | 1.0 | 83 | 1.2 | 84 | 1.2 | 84 | 1.2 |
| 2000h | 65 | 1.3 | 77 | 1.5 | 84 | 2.1 | 84 | 1.5 |

| **Sample** | **Comp Ex 1** | | | | **Example 1** | | | |
|---|---|---|---|---|---|---|---|---|
| Duration | L* | a* | b* | ΔE | L* | a* | b* | ΔE |
| 0 | 93.5 | -1.7 | 5.0 | | 93.5 | -1.7 | 5.2 | |
| 500h | 91.0 | -3.2 | 14.2 | 9.7 | 93.2 | -1.8 | 6.2 | 1.0 |
| 1000h | 88.6 | -3.8 | 21.8 | 17.7 | 92.6 | -2.2 | 8.3 | 3.3 |
| 2000h | 84.5 | -3.3 | 32.6 | 19.5 | 90.3 | -3.1 | 15.4 | 9.8 |

| **Sample** | **Example 2** | | | | **Example 3** | | | |
|---|---|---|---|---|---|---|---|---|
| Duration | L* | a* | b* | ΔE | L* | a* | b* | ΔE |
| 0 | 85 | 1.2 | 84 | 1.4 | 84 | 1.5 | 84 | 1.5 |
| 500h | 79 | 1.1 | 84 | 1.3 | 84 | 1.3 | 84 | 1.3 |
| 1000h | 74 | 1.0 | 83 | 1.2 | 84 | 1.2 | 84 | 1.2 |
| 2000h | 65 | 1.3 | 77 | 1.5 | 84 | 2.1 | 84 | 1.5 |

### Example B1 - B7 and Comparative example B8 - B10

Compositions of PVB resin (Mowital^{®} B60H commercially available from Kuraray Europe GmbH) with CWO, UV absorber (Tinuvin^{®} 360 or Tinuvin^{®} 326) and an anti-oxidant (Irganox^{®} 245) were obtained by twin screw extruder at 200 °C. Films of 150 mm width were obtained by using a single screw extruder with a T-die at 200 ºC. The compositions and UV transmittance can be found in table 1.

**Table 1**

| Film No. | Area dencity of CWO | Thickness of film | Weight ratio | | | | Transmittance | |
|---|---|---|---|---|---|---|---|---|
| | | | PVB | Tinuvin 360 | Tinuvin 326 | Irganox 245 | 380nm | 350nm |
| B1 | 1.2g/m2 | 60µm | 100 | 2 | - | 0.073 | 3.6 | 0 |
| B2 | 1.1g/m2 | 55µm | 100 | 2 | - | 0.073 | 4.5 | 0 |
| B3 | 1.0g/m2 | 50µm | 100 | 2 | - | 0.073 | 5.0 | 0 |
| B4 | 0.9g/m2 | 45µm | 100 | 2 | - | 0.073 | 6.9 | 0 |
| B5 | 0.8g/m2 | 40µm | 100 | 2 | - | 0.073 | 7.0 | < 0.1 |
| B6 | 0.7g/m2 | 35µm | 100 | 2 | - | 0.073 | 12.0 | < 0.1 |
| B7 | 0.6g/m2 | 30µm | 100 | 2 | - | 0.073 | 14.5 | < 0.1 |
| B8 | 0g/m2 | 50µm | 100 | 1 | - | 0.073 | 18.3 | - |
| B9 | 0g/m2 | 50µm | 100 | - | - | 0.073 | - | - |
| B10 | 0.5g/m2 | 50µm | 100 | - | 0.15 | 0.073 | - | - |

### UV resistance test

The thin PVB films of Examples B3 to B7 and Comparative Examples B8 to B10, and a commercially available multi-layer polyester film having an IR reflection function were each cut into 5 x 5 cm, and arranged on a clear glass or green (tinted) glass having a thickness of 2 mm (as the room side glass) of 5 x 5 cm. An interlayer film for automobile windshields (TROSIFOL^{®} V200 commercially available from Kuraray Europe GmbH) of 5 x 5 cm and 0.76 mm thickness, and a 3 mm thickness clear glass (as outside glass) of 5 x 5 cm were layered thereon.

Subsequently, this layered product was placed in a vacuum bag and decompressed at room temperature for 15 minutes using a vacuum pump. Then, the temperature was raised to 100 °C while decompressing, and heating was continued as it is for 60 minutes.

After cooling, the pressure was returned to normal pressure, and the laminated glass after prelamination obtained.

Thereafter, the laminated glass was put into an autoclave and treated at 140 °C and 1.2 MPa for 30 minutes to produce the final laminated glass.

The visible light transmittance (Tvis) was measured according to JIS R3112 using a UV-VIS-NIR Spectrophotometer UV3600 (Shimadzu Corporation) before and after UV irradiation to thin PVB film side of laminated glass according to JIS3212 (750W Mercury lamp) for 1000 h. The results of the Tvis (ΔTvis) change are shown in Table 2.

**Table 2**

| Outside glass | Interlayer | IR reflection layer | Thin PVB layer | | | | | Room side glass | UV from outside | UV from room side |
|---|---|---|---|---|---|---|---|---|---|---|
| | | | No. | CWO | Thickness | TIN360 | TIN326 | | Δ Tvis | Δ Tvis |
| Clear (3) | V200 | C2 | B3 | 1.0g/m2 | 50µm | 2phr | - | Clear (3) | -2.1 | -4.7 |
| Clear (3) | V200 | C2 | B7 | 0.6g/m2 | 30µm | 2phr | - | Green (3) | -1.6 | -3.8 |
| Clear (3) | V200 | C2 | B8 | - | 50µm | 1phr | - | Clear (3) | -0.4 | -0.5 |
| Clear (3) | V200 | C2 | B8 | - | 50µm | 1phr | - | Green (3) | -0.4 | -0.6 |
| Clear (3) | V200 | C2 | A0 | - | 50µm | - | - | Clear (3) | n.d. | -11.3 |
| Clear (3) | V200 | - | A0 | - | 50µm | - | 0.15phr | Clear (3) | -6.3 | -21.1 |

### Optical properties

The thin PVB films obtained in Examples B3 to B7, and commercially available multi-layer polyester films having IR reflection function were each cut into 5 x 5 cm, and arranged on a clear glass or green (tinted) glass having a thickness of 2 mm (as the room side glass) of 5 x 5 cm. An interlayer film for automobile windshields (TROSIFOL^{®} V200 commercailly available from Kuraray Europe GmbH) of 5 x 5 cm and 0.76 mm thickness, and a clear glass having a thickness of 2 mm (as outside glass) of 5 x 5 cm were layered thereon.

Subsequently, this layered product was placed in a vacuum bag and decompressed at room temperature for 15 minutes using a vacuum pump. Then, the temperature was raised to 100 °C while decompressing, and heating was continued for 60 minutes. After cooling, the pressure was returned to normal pressure, and a laminated glass after prelamination was obtained.

Thereafter, the laminated glass was put into an autoclave and treated at 140 °C and 1.2 MPa for 30 minutes to produce the final laminated glass.

For each of the obtained laminated glass having an IR reflective polyester film layer and IR & UV absorbing thin PVB layer, the visible light transmittance (Tvis) was measured according to JIS R3112 and the total solar energy transmittance (Tts) was measured according to ISO 13837, using a UV-VIS-NIR Spectrophotometer UV3600 (Shimadzu Corporation). The results of the Tvis and Tts are shown in Table 3.

**Table 3**

| Outside glass | Interlayer | IR reflection | Thin PVB layer | | | | | Room side glass | TV (%) | Tts (%) |
|---|---|---|---|---|---|---|---|---|---|---|
| | | | No. | CWO | Thickness | TIN 360 | TIN326 | | | |
| Clear (2) | V200 | C2 | B3 | 1.0g/m2 | 50µm | 2phr | - | Clear (2) | 72.1 | 47.4 |
| Clear (2) | V200 | C2 | B7 | 0.6g/m2 | 30µm | 2phr | - | Green (2) | 73.0 | 48.6 |

## Claims

1. A laminated glass comprising a first glass sheet and a second glass sheet laminated by means of at least one thermoplastic interlayer comprising at least one functional polymer film C sandwiched by
- at least one film A with a thickness of equal to or less than 100 µm comprising a polyvinyl acetal and a UV absorber, and
- at least one film B comprising a polyvinyl acetal and at least one plasticiser,
**characterised in that** film A has a light transmittance for light with a wavelength of 380 nm of 15% or less and a light transmittance for light with a wavelength of 350 nm of 3% or less .

2. The laminated glass according to claim 1 wherein the functional polymer film C comprises a polyamide, a polyester such as polyethylene terephthalate (PET), polybutylene terephthalate (PBT), polyethylen furanoate (PEF) and polyethylene naphthalate (PEN), polyvinyl alcohol (PVA), polylactic acid (PLA), cellulose acetate, polymethyl methacrylates (PMMA), ionomers, or a combination, preferably the functional polymer film C comprises a polyester such as polyethylene terephthalate (PET) and polybutylene terephthalate (PBT).

3. The laminated glass according to claim 1 or 2 wherein film A, film B, and/or the functional polymer film C is provided with a heat-shielding function, a head-up display function, a metal-film function, a non-metal film function or a photovoltaic function.

4. The laminated glass according to claim 3 wherein film A is provided with a heat-shielding function and comprises indium tin oxide (ITO), antimony tin oxide (ATO), zinc antimonates, tin-doped zinc oxide, silicon-doped zinc oxide, gallium-doped zinc oxide, tungstates such as lithium-doped tungsten oxide, sodium-doped tungsten oxide and cesium-doped tungsten oxide, lanthanum hexaboride, cerium hexaboride or a mixture thereof.

5. The laminated glass according to any one of claims 1 to 4 wherein film A comprises from 0.5 to 5.0 wt% of UV absorber.

6. The laminated glass according to any one of claims 1 to 5 wherein the UV absorber has a vapour pressure of equal to or below 10 * 10⁻¹³ Pa measured at 25 ºC.

7. The laminated glass according to any one of claims 1 to 6 wherein the UV absorber has a volatility of equal to or below 5 wt% as measured by thermogravimetric analysis as pure substance with a heating rate of 20 °C/min in air at 350 ºC.

8. The laminated glass according to any one of claims 1 to 7 wherein the UV absorber has a hydroxyphenyl benzotriazole structural unit.

9. The laminated glass according to any one of claims 1 to 8 wherein the thickness of film A is from 5 to 50 µm.

10. The laminated glass according to any one of claims 1 to 9 wherein film A comprises equal to or below 5 wt% plasticizer.

11. The laminated glass according to any one of claims 1 to 10 wherein the polyvinyl acetal of film A and film B is polyvinyl butyral.

12. A process for the preparation of the laminated glass according to any one of claims 1 to 11 wherein film A is produced by melt extrusion.

13. The process according to claim 1 to 11 wherein film A is produced in a solvent casting process using a solution of the polyvinyl acetal, the UV absorber and optional other components.

14. A pre-laminate consisting of a functional polymer film C comprising a polyester such as polyethylene terephthalate (PET) and polybutylene terephthalate (PBT) and a film A comprising a polyvinyl acetal and a UV absorber.
